# EUROPEAN PATENT APPLICATION

(11) **EP 4 815 129 A1**
(43) Date of publication of application: **30.09.2026**
(21) Application number: 26155355.6
(22) Date of filing: 30.01.2026
(51) Int. Cl.: H01M 50/176, H01M 50/184, H01M 50/188, H01M 50/55, H01M 50/593

(54) **SECONDARY BATTERY**

(30) Priority: 25.03.2025 KR 20250037700
(71) Applicant: SAMSUNG SDI CO., LTD., Yongin-si, Gyeonggi-do 17084 (KR)
(72) Inventor: JEON, Kiyoun, 17084 Yongin-si (KR)
(74) Representative: Maiwald GmbH

(57) **Abstract**

A secondary battery including an electrode assembly including a lead tab, a body portion including an accommodating portion, a first terminal through-hole formed on one side of the body portion, and having an open end, a cover sealing the open end of the body portion, an insulator disposed on a lower surface of the one side of the body portion and including a second terminal through-hole formed at a position corresponding to the first terminal through-hole, a terminal plate having two sides, being disposed on a lower surface of the insulator, and having a third terminal through-hole formed at a position corresponding to the second terminal through-hole, a terminal passing through the first to third terminal through-holes, and a gasket surrounding at least a portion of a side surface of the terminal such that at least a portion of the terminal is exposed to an outside of the body portion.

## Description

### BACKGROUND

### Field

The present disclosure relates to a secondary battery.

### Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode terminal may pass through one side of the case and may be electrically connected to the electrode assembly accommodated inside the case. The electrode terminal may be electrically connected to the electrode assembly via a terminal plate. When the case has a specific polarity and serves as a terminal, the electrode terminal and the case may have different polarities. During assembly or use of the secondary battery, various factors such as external vibration or impact may permit the terminal plate to rotate about the electrode terminal. If the terminal plate rotates, the terminal plate may contact the case, and a terminal plate contacting a case having the opposite polarity may cause an internal short circuit.

The above information disclosed in this Background section is for enhancement of understanding of the background of the present disclosure, and therefore, it may contain information that does not constitute related (or prior) art.

### SUMMARY

An object of the present disclosure is to provide a secondary battery that resolves the above-described problem.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an aspect of the present disclosure that solves the foregoing technical problem, a secondary battery may include an electrode assembly including a lead tab, a body portion including an accommodating portion accommodating the electrode assembly, an insulator disposed on a lower surface of the one side of the body portion and including a second terminal through-hole formed at a position in line with the first terminal through-hole, a terminal plate having two long sides and two short sides, being disposed on a lower surface of the insulator, and having a third terminal through-hole formed at a position in line with the second terminal through-hole, a terminal passing through the first terminal through-hole, the second terminal through-hole, and the third terminal through-hole, the terminal being electrically connected to the terminal plate, and a gasket surrounding at least a portion of a side surface of the terminal such that at least a portion of the terminal may be exposed to an outside of the body portion, the gasket being in close contact with an inner wall of the body portion. A first terminal through-hole may be formed on one side of the body portion. One end of the body portion may be open to form an open end A cover may seal the open end of the body portion. The insulator may include an extension wall protruding downward from the lower surface of the insulator to contact at least a portion of a long side surface of one of the two long sides of the terminal plate, the extension wall being configured to prevent rotation of the terminal plate about the terminal.

In some embodiments, the extension wall may include a first extension wall contacting at least a portion of a first long side surface of the terminal plate and a second extension wall contacting at least a portion of a second long side surface of the terminal plate opposite to the first long side surface. The first extension wall and the second extension wall may be asymmetrically disposed from each other with respect to the terminal plate.

In some embodiments, the extension wall may include a first extension wall contacting at least a portion of a first long side surface of the terminal plate and a second extension wall contacting at least a portion of a second long side surface of the terminal plate, the second long side surface being opposite to the first long side surface. Lengths, in a longitudinal direction, of the first extension wall and the second extension wall may be different.

In some embodiments, the extension wall may include a first extension wall contacting at least a portion of a first long side surface of the terminal plate and a second extension wall contacting at least a portion of a second long side surface of the terminal plate opposite to the first long side surface. The lead tab may be connected to at least a portion of a lower surface of the terminal plate and a lower edge of the second long side surface. The first extension wall contacts at least half of the first long side surface. The second extension wall contacts an area of the second long side surface other than an upper portion of the lead tab.

In some embodiments, the second extension wall may be located between an upper portion of the lead tab and the terminal.

In some embodiments, the second extension wall may be located on a side of the terminal that may be opposite to a side of the terminal where an upper portion of the lead tab may be located.

In some embodiments, the extension wall may include a first extension wall contacting at least a portion of a first long side surface of the terminal plate and a second extension wall contacting at least a portion of a second long side surface of the terminal plate opposite to the first long side surface. The lead tab may be connected to at least a portion of a lower surface of the terminal plate and to a lower edge of the second long side surface. The second extension wall may be located on a side of the terminal opposite to a side of the terminal where an upper portion of the lead tab may be located. The first extension wall may have a same size as the second extension wall.

In some embodiments, the body portion may include a protrusion protruding downward from the lower surface of the one side of the body portion to contact at least a portion of a long side surface of the insulator, the protrusion being configured to prevent rotation of the insulator about the terminal.

In some embodiments, the protrusion may be spaced apart from the cover or from a bottom surface of the body portion by a predetermined distance.

In some embodiments, the protrusion contacts the cover or a bottom surface of the body portion.

In some embodiments, the protrusion extends beyond a second end portion opposite to a first end portion adjacent to the terminal in the insulator.

In some embodiments, the protrusion may be disposed outward of the extension wall.

In some embodiments, the protrusion contacts at least a portion of a side surface of the extension wall.

In some embodiments, the extension wall may include a first extension wall contacting at least a portion of a first long side surface of the terminal plate and a second extension wall contacting at least a portion of a second long side surface of the terminal plate opposite to the first long side surface. The lead tab may be connected to at least a portion of a lower surface of the terminal plate and to a lower edge of the second long side surface. The first extension wall contacts at least half of the first long side surface. The second extension wall contacts an area of the second long side surface other than an upper portion of the lead tab. The protrusion may include a first protrusion contacting a second short side surface opposite to a first short side surface adjacent to a terminal of the first extension wall, and a second protrusion contacting a second short side surface opposite to a first short side surface adjacent to a terminal of the second extension wall.

In some embodiments, the first protrusion and the second protrusion extend beyond a second end portion, which may be opposite to a first end portion and may be adjacent to the terminal in the insulator.

In some embodiments, a longitudinal length of a cross-sectional area in contact with the protrusion in the insulator may be less than a longitudinal length of a cross-sectional area where the extension wall may be located in the insulator.

In some embodiments, the terminal may include a head portion at least partially exposed outside the body portion, a pin portion connected to a lower surface of the head portion and passing through the first terminal through-hole, the second terminal through-hole, and the third terminal through-hole, and a bottom portion coupled to a lower surface of the pin portion, pressing together and fixing together the one side of the body portion, the insulator, and the terminal plate.

In some embodiments, the body portion and the cover each may include stainless steel.

In some embodiments, a thickness of the body portion may be from about 0.05 mm to about 0.3 mm. A thickness of the cover may be from about 0.05 mm to about 0.3 mm.

According to an aspect of the present disclosure that solves the foregoing technical problem, a secondary battery may include an electrode assembly including a lead tab, a body portion including an accommodating portion accommodating the electrode assembly, a cover sealing the open end of the body portion, an insulator disposed on a lower surface of the one side of the body portion and including a second terminal through-hole formed at a position in line with the first terminal through-hole, a terminal plate having two long sides and two short sides, being disposed on a lower surface of the insulator, and having a third terminal through-hole formed at a position in line with the second terminal through-hole, a terminal passing through the first terminal through-hole, the second terminal through-hole, and the third terminal through-hole, the terminal being electrically connected to the terminal plate, and a gasket surrounding at least a portion of a side surface of the terminal such that at least a portion of the terminal may be exposed to an outside of the body portion, the gasket being in close contact with an inner wall of the body portion. A first terminal through-hole may be formed on one side of the body portion. One end of the body portion may be open to form an open end. The insulator may include an extension wall protruding downward from the lower surface of the insulator to contact at least a portion of a surface of each of the two long sides of the terminal plate, the extension wall being configured to prevent rotation of the terminal plate about the terminal. The body portion may include a protrusion protruding downward from the lower surface of the one side of the body portion to contact at least a portion of a long side surface of the insulator, the protrusion being configured to prevent rotation of the insulator about the terminal. The lead tab may include a first lead tab electrically connected to a first electrode of the electrode assembly, and a second lead tab electrically connected to a second electrode of the electrode assembly. The terminal and the terminal plate may be electrically connected to the first electrode through the first lead tab. The body portion may be electrically connected to the second electrode through the second lead tab.

According to some embodiments, the extension wall of the insulator may prevent rotation of the terminal plate about the terminal.

According to some embodiments, the protrusion of the one side of the body portion of the case may prevent rotation of the insulator about the terminal.

According to some embodiments, the extension wall and the protrusion may prevent rotation of the terminal plate caused by external vibration or impact, thereby reducing a likelihood of an internal short circuit resulting from contact between the terminal plate and the body portion or the cover that have the opposite polarity.

According to some embodiments, a number of components required to assemble the secondary battery may be reduced compared with designing two pin-type terminals having different polarities.

According to some embodiments, when a thickness of the case of the secondary battery is as thin as 0.05 mm-0.3 mm, it may be more advantageous in terms of manufacturability to design the extension wall of the insulator and/or the protrusion of the body portion of the case rather than to design an embedded rotation-preventing structure.

According to some embodiments, by designing the extension wall and/or the protrusion at specific positions on one side of the insulator and the body portion, rotation of the terminal plate and/or the insulator may be effectively prevented.

However, aspects and features of the present disclosure are not limited to those described above, and other aspects and features not described will be clearly understood by a person skilled in the art from the following detailed description.

### BRIEF DESCRIPTION OF THE DRAWINGS

The attached drawings illustrate some embodiments of the present disclosure and, together with the detailed description, further describe some aspects and features of the present disclosure. Accordingly, the present disclosure should not be construed as limited to the drawings.
FIG. 1 is an exploded perspective view illustrating a secondary battery according to some embodiments of the present disclosure.
FIG. 2 is a schematic view illustrating part of an interior of a secondary battery according to some embodiments of the present disclosure.
FIG. 3 is a schematic view illustrating part of a manufacturing process of a secondary battery according to some embodiments of the present disclosure.
FIG. 4 is a view illustrating components of a terminal in a secondary battery prior to assembling the terminal according to some embodiments of the present disclosure.
FIG. 5 is a view illustrating a short circuit in a secondary battery according to some embodiments of the present disclosure.
FIG. 6 is a schematic view illustrating a portion of a secondary battery according to some embodiments of the present disclosure.
FIGS. 7 to 9 are schematic views of positions of an extension wall of a secondary battery according to some embodiments of the present disclosure.
FIG. 10 is a schematic view of a protrusion of a secondary battery according to some embodiments of the present disclosure.
FIGS. 11 to 13 are schematic views of positions of a protrusion of a secondary battery according to some embodiments of the present disclosure.
FIG. 14 is a schematic view of a protrusion of a secondary battery according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Terms used in this specification are for describing embodiments and are not intended to limit the present disclosure.

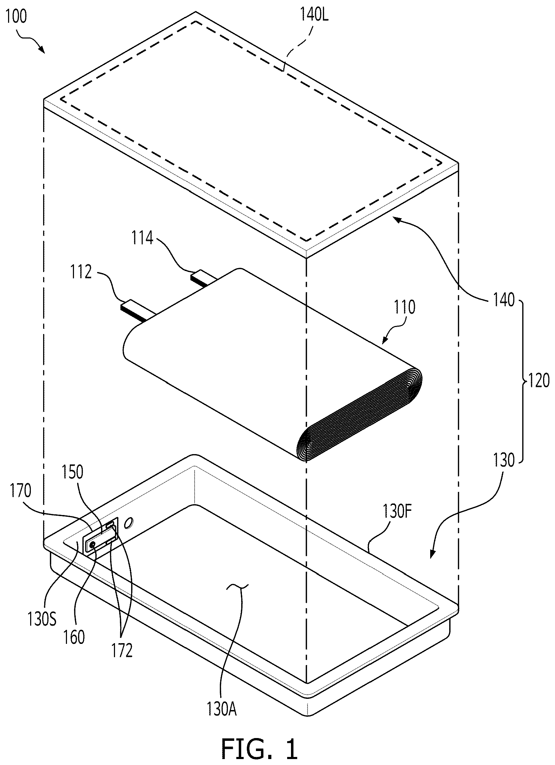

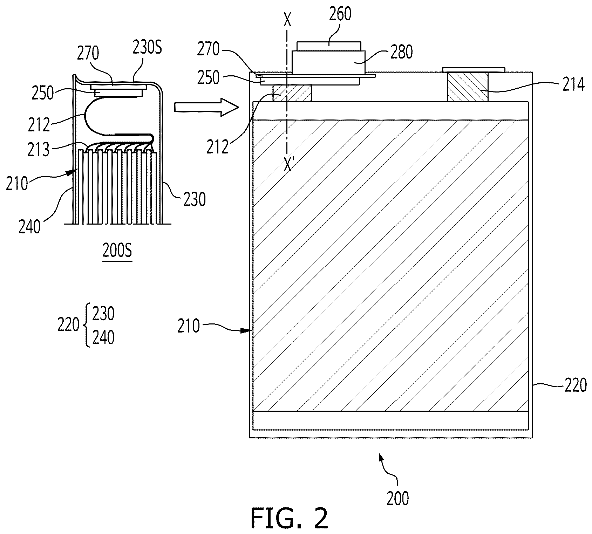

FIG. 1 is an exploded perspective view illustrating a secondary battery according to some embodiments of the present disclosure. FIG. 2 is a schematic view illustrating a portion inside a secondary battery according to some embodiments of the present disclosure.

A secondary battery 100 may include a case 120, an electrode assembly 110 and electrolyte accommodated within the case 120, an insulator 170, a terminal plate 150, a terminal 160, and a gasket.

The electrode assembly 110 may include a first electrode, a second electrode, and a separator interposed between the first electrode and the second electrode. The electrode assembly may be a wound-type electrode assembly in which the first electrode, the separator, the second electrode, and the separator are sequentially stacked and wound. Alternatively, the electrode assembly may be a stacked-type electrode assembly in which unit cells, each stacked in the order of the first electrode, separator, second electrode, and separator, are repeatedly stacked. Referring to FIG. 1, a wound-type electrode assembly 110 is illustrated, but the present disclosure is not limited thereto, and the form and structure of the electrode assembly are not specifically limited.

The first electrode may include a first substrate and a first active material layer disposed on the first substrate. As illustrated in FIG. 2, a first substrate tab 213 may extend outward from a first uncoated region of the first substrate, where the first active material layer is not positioned, and the first substrate tab 213 may be electrically connected to a terminal plate 250 via a first lead tab 212.

The second electrode may include a second substrate and a second active material layer disposed on the second substrate. A second substrate tab may extend outward from a second uncoated region of the second substrate, where the second active material layer is not positioned, and as illustrated in FIG. 2, the second substrate tab may be electrically connected to a case 220, including a body portion 230 and a cover 240, via a second lead tab 214. The first substrate tab and the second substrate tab may extend in opposite directions or in the same direction from the electrode assembly 210, and each of the first substrate tab 213 and the second substrate tab may be bent at respective predetermined positions.

The first electrode may function as a positive electrode. The first substrate may include, for example, aluminum foil, titanium-coated aluminum foil, or carbon-coated aluminum foil, and the first active material layer may include a positive electrode active material, such as lithium nickel cobalt manganese oxide, lithium nickel cobalt aluminum oxide, or lithium manganese oxide. The first active material layer may further include a conductive agent or a binder.

The second electrode may function as a negative electrode. The second substrate may include, for example, copper foil, nickel foil, copper-nickel alloy foil, or carbon-coated copper foil, and the second active material layer may include a negative electrode active material, such as graphite, silicon oxide, or lithium titanate. The second active material layer may further include a conductive agent or a binder. Alternatively, the first electrode may function as a negative electrode, and the second electrode may function as a positive electrode.

The conductive agent may serve to enhance electrical conductivity of the active material, thereby improving battery performance, and examples thereof include carbon black, acetylene black, and carbon nanotube (CNT). The binder serves to enhance adhesion between active material particles and the current collector and to maintain mechanical stability of the electrode. Examples of the binder may include polyvinylidene fluoride (PVDF), carboxymethyl cellulose (CMC), and polyacrylic acid (PAA).

The separator may allow the movement of ions while preventing short circuits between the first electrode and the second electrode. The separator may include, for example, polyethylene film, polypropylene film, polyethylene-polypropylene film, polyimide (PI), ceramic-coated polyethylene film, or ceramic-coated polyimide film.

The materials for the substrate, active material, conductive agent, binder, and separator are not limited to those described above, and any materials commonly used in the art may be employed.

The electrode assembly 110 according to some embodiments may include the first lead tab 112 connected to the first substrate tab 213 extending from one side of the first electrode and the second lead tab 114 connected to the second substrate tab extending from one side of the second electrode. In some embodiments, the first lead tab 112 may be connected to a plurality of first substrate tabs extending from a plurality of first electrodes of the electrode assembly 110. The second lead tab 114 may be connected to a plurality of second substrate tabs extending from a plurality of second electrodes of the electrode assembly.

The case 120 may include a body portion 130 having a receiving portion 130A that accommodates the electrode assembly 110 and is open at one end, and a cover 140 sealing the open end of the body portion 130. The body portion 130 may be rectangular or cylindrical, and the cover 140 may be plate shaped and/or may have a specific shape depending on a form of the body portion 130.

The body portion 130 and cover 140 may be made of metallic material. In some embodiments, the body portion 130 and cover 140 are composed of the same metallic material, for example, stainless steel (Steel Use Stainless, SUS). Stainless steel has high corrosion resistance, durability, strength, and thermal stability. Using stainless steel as the material for the case 120 can be advantageous for preventing corrosion due to reactions with electrolytes, preventing structural damage to the secondary battery from drop impacts or pressure changes, and ensuring safety under high-temperature conditions such as thermal runaway. Additionally, stainless steel has excellent processability in terms of machining aspects such as deep drawing, punching, and welding.

As described above, using a stainless-steel case 120 may allow designing a relatively thin case 120, thereby improving energy density per volume or weight of the secondary battery 100. In some embodiments, a thickness of the body portion 130 and the cover 140 may each be from about 0.05 mm to about 0.3 mm.

The electrode assembly 110 may be accommodated in the receiving portion so that the lead tabs face one side 130S of the body portion. The one side 130S may be a long side or a short side other than the cover 140 or a bottom surface of the body portion 130. The lead tabs include the first lead tab 112 electrically connected to the first electrode and the second lead tab 114 electrically connected to the second electrode. The first lead tab 112 and the second lead tab 114 may be disposed in the same direction or in opposite directions with respect to the electrode assembly 110. As illustrated in FIG. 1, when the first lead tab 112 and the second lead tab 114 extend in the same direction with respect to the electrode assembly 110, the electrode assembly 110 may be accommodated in the receiving portion 130A so that the first lead tab 112 and the second lead tab 114 face the one side 130S of the body portion 130. In some embodiments, when the first lead tab 112 and the second lead tab 114 extend in opposite directions with respect to the electrode assembly 110, the electrode assembly 110 may be accommodated in the receiving portion 130A so that the first lead tab 112 faces the one side 130S of the body portion 130, and the second lead tab 114 faces a side opposite to the one side 130S.

The body portion 130 according to some embodiments may include a flange portion 130F that extends outward from a rim of the open end. The cover 140 is disposed on the flange portion 130F, and the cover 140 and the flange portion 130F may be joined by a joining method such as welding, thermal fusion, or the like, without limitation to the joining method. A joining line 140L, such as a weld trace, may be formed on the cover 140 by the joining method. In some embodiments, the joining line 140L may be a weld bead or a weld mark that is formed when laser welding is performed on the flange portion 130F in the direction toward the cover from the lower surface of the flange portion 130F on which the cover 140 is disposed, approximately along a central-running axis of the flange portion 130F.

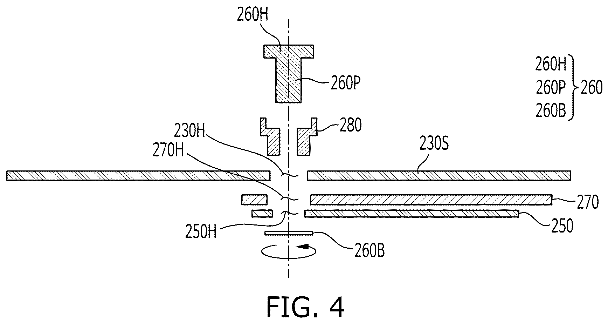

The body portion 130 according to some embodiments may include a first terminal through-hole 230H (shown in FIG. 4) formed in the one side 130S. The first terminal through-hole is an opening configured to allow passage of the terminal 160 electrically connected to the first electrode and may be formed at a position adjacent to the first lead tab 112. The terminal 160 may be, for example, a pin-type terminal, and the first terminal through-hole may have an approximately circular cross section so that the pin-type terminal can pass therethrough.

The insulator 170 may be disposed on a lower surface of the one side 130S of the body portion 130 and may include a second terminal through-hole 270H (shown in FIG. 4) formed at a position in line with to the first terminal through-hole. The second terminal through-hole may have an approximately circular cross section so that the terminal 160 that has passed through the first terminal through-hole can pass therethrough. The insulator 170 is disposed on the lower surface of the one side 130S of the body portion around the terminal 160 and, by having a larger size than the terminal plate 150, may insulate the terminal 160 and the terminal plate 150 from the body portion 130. In some embodiments, the insulator 170 may be rectangular and plate shaped and may be smaller than the one side 130S of the body portion 130.

The insulator 170 may include an insulating material such as polypropylene (PP), polyamide (PA), or polyimide (PI).

The terminal plate 150 may be disposed on a lower surface of the insulator 170 and may include a third terminal through-hole 250H (shown in FIG. 4) formed at a position in line with the second terminal through-hole. The third terminal through-hole may have an approximately circular cross section so that a terminal 160 that has passed through the first and second terminal through-holes can pass through the third terminal through-hole. The terminal plate 150 may be smaller than the insulator 170 and may be made of metallic material. For example, the terminal plate 150 may include stainless steel and/or the same material as that of the case 120. The terminal plate 150 may be plate shaped so that the first lead tab 112 can be easily joined to the terminal plate 150. More particularly, the terminal plate 150 may be rectangular and plate shaped.

The terminal plate 150 may be electrically connected to the terminal 160 by contact between an inner wall of the terminal plate 150 that forms the third terminal through-hole and the terminal 160, and the first lead tab 112 may be joined to a lower surface of the terminal plate 150 by welding or the like and may be electrically connected to the first electrode of the electrode assembly 110.

As shown in FIG. 1, the insulator 170 according to some embodiments of the present disclosure may further include one or more extension walls 172 that protrude downward from the lower surface of the insulator 170 to contact at least a portion of a long side surface of the terminal plate 150 and that are configured to prevent rotation of the terminal plate 150 about the terminal 160.

A gasket may surround at least a portion of the side surface of the terminal 160 so that at least a portion of the terminal 160 is exposed outside the body portion 130 and may be in close contact with an inner wall of the body portion 130 that forms the first terminal through-hole. The gasket may include a resin such as polyurethane (PU), epoxy resin, silicone resin, or fluororesin, but the gasket is not limited thereto and may include any common insulating material. The gasket may insulate the terminal 160, which may have the polarity of the first electrode, from the body portion 130, which may have the polarity of the second electrode.

In a secondary battery 100 according to some embodiments of the present disclosure, the insulator 170 may include the extension wall 172 protruding downward from the lower surface of the insulator 170 to contact at least a portion of each long side surface of the terminal plate 150 and configured to prevent rotation of the terminal plate 150 about the terminal 160. In some embodiments, the body portion 130 may further include a protrusion (not shown) that protrudes downward from the lower surface of the one side 130S of the body portion 130 to contact at least a portion of a long side surface of the insulator 170 and is configured to prevent rotation of the insulator 170 about the terminal 160.

Referring to a view 200 illustrating the interior of the secondary battery of FIG. 2, an insulator 270 is disposed on an upper surface of a terminal plate 250 connected to the first lead tab 212 of the electrode assembly 210, and the one side 230S of the body portion 230 of the case 220 is disposed on an upper surface of the insulator 270. At least a portion of a side surface of a terminal 260 protruding outward from an outer surface of the one side 230S of the body portion 230 is surrounded by a gasket 280, and a portion of the terminal 260 not covered by the gasket 280 may be exposed to the outside. The portion of the terminal 260 that is exposed to the outside may be a portion that is electrically connected to an external device of the secondary battery.

The second lead tab 214 of the electrode assembly 210 may be connected to an inner surface of the one side 230S of the body portion 230 so that the case 220 can be electrically connected to the second electrode. Accordingly, the case 220 may have the polarity of the second electrode.

Referring to a sectional view 200S taken along line XX' of the secondary battery, first substrate tabs 213 extending from first uncoated regions of a plurality of first electrodes of the electrode assembly 210 may be bundled together and connected to the first lead tab 212. At least one of the first substrate tab 213 and the first lead tab 212 may be bent at a specific angle at a specific position so that the first substrate tab 213 and/or the first lead tab 212 may be accommodated in a space having a gap between the bottom surface of the body portion 230 and the cover 240 without contact with the case 220. In some embodiments, one end of the first lead tab 212 may be connected to the first substrate tab 213, the other end of the first lead tab 212 may be connected to the terminal plate 250, and the first lead tab 212 may be bent in a space adjacent to the cover 240.

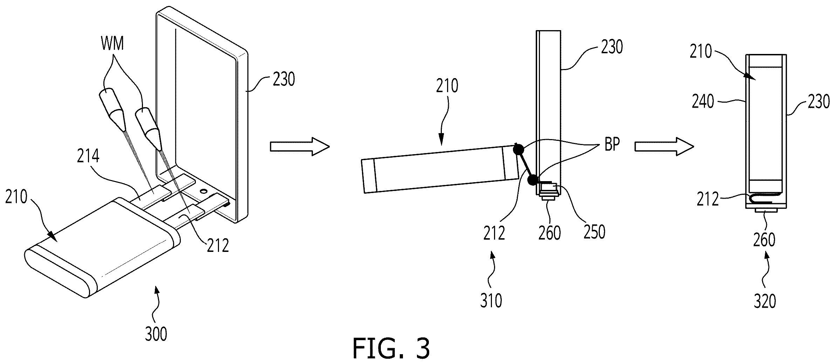

FIG. 3 is a schematic view illustrating a portion of a manufacturing process of a secondary battery according to some embodiments of the present disclosure.

View 300 illustrates a process of joining the lead tabs of the electrode assembly 210 and the case 220, and, in some embodiments, the first lead tab 212 and the second lead tab 214 of the electrode assembly 210 may be laser-welded or resistance-welded by a welder WM so that the first lead tab 212 and the second lead tab 214 may be directly joined to one side of the body portion 230 that can accommodate the electrode assembly 210 or may be joined through another joining process.

According to a view 310 illustrating a bending process of the first lead tab 212 of the electrode assembly 210, the first lead tab 212 coupled to one surface of the terminal plate 250 may have two bending points BP. The number of bending points BP of the first lead tab 212 is not limited to two and may vary according to the length of the first lead tab 212 and an internal volume (or space) of the assembled case 220. Through the bending process of the first lead tab 212, the electrode assembly 210 may be accommodated in the receiving portion of the body portion 230. Since the electrode assembly 210 is fixed only to the terminal plate 250 through the first lead tab 212, if the terminal plate 250 rotates by a predetermined angle about the terminal 260, the first lead tab 212 connected to the terminal plate 250 may deviate from its designed position and may run the risk of contacting the case.

Referring to a view 320 illustrating the interior side of the secondary battery after completion of sealing the open end of the body portion 230 with the cover, for a high-energy density design of the secondary battery, the distance between the first lead tab 212 or the first substrate tab and the bottom surface of the body portion 230, and the distance between the first lead tab 212 and the cover 240, may be relatively short. Therefore, even if the terminal plate 250 rotates only by a small angle about the terminal 260, a short circuit may occur due to contact between the first lead tab 212 and/or the first substrate tab and the case.

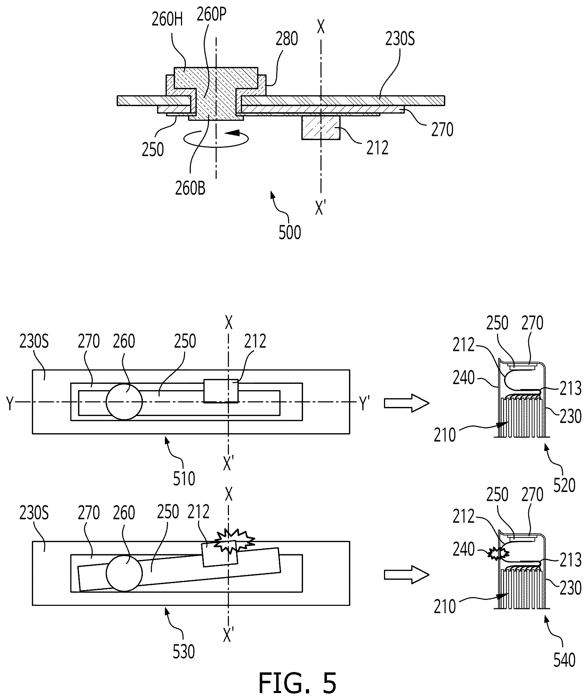

FIG. 4 is a view illustrating components of a terminal in a secondary battery prior to assembling the terminal according to some embodiments of the present disclosure. Particularly, FIG. 4 is a sectional view showing an arrangement around the terminal 260 to assemble the terminal 260 of the secondary battery. FIG. 5 is a view illustrating a short circuit in a secondary battery.

The terminal 260 may include a head portion 260H, a pin portion 260P, and a bottom portion 260B. At least a portion of the head portion 260H may be exposed outside the one side 230S of the body portion. The gasket 280 may be configured to surround at least a portion of the side surface of the head portion 260H. A region of the head portion 260H not surrounded by the gasket 280 may be exposed to the outside and may be a portion electrically connected to an external electronic device.

The pin portion 260P is connected to a lower surface of the head portion 260H and may pass through the first terminal through-hole 230H of the one side 230S, the second terminal through-hole 270H of the insulator 270, and the third terminal through-hole 250H of the terminal plate 250. The pin portion 260P may be cylindrical and may be integrally connected to the head portion 260H. At least a portion of the side surface of the pin portion 260P may be surrounded by the gasket 280. In some embodiments, the gasket 280 may be disposed on an inner wall of the one side 230S of the body portion that forms the first terminal through-hole 230H so that the terminal 260 and the body portion are electrically insulated from each other. The inner wall of the insulator 270 forming the second terminal through-hole 270H may or may not be provided with the gasket 280.

The bottom portion 260B is coupled to a lower surface of the pin portion 260P and may press and fix the one side 230S of the body portion, the insulator 270, and the terminal plate 250. As illustrated in FIG. 1, the bottom portion 260B may be coupled to the lower surface of the pin portion 260P such that directions of length of the one side 230S of the body portion and directions of length of the insulator 270 and the terminal plate 250 are arranged in parallel. The bottom portion 260B may be a component separate from the pin portion 260P and may be assembled to the lower surface of the pin portion 260P to press and fix the insulator 270 and the terminal plate 250 to the one side 230S of the body portion. The bottom portion 260B may be assembled to the lower surface of the pin portion 260P through rotation.

As described above, since the insulator 270 is not directly connected to the one side 230S of the body portion, and the terminal plate 250 is not directly connected to the insulator 270. But the one side 230S of the body portion, the insulator 270, and the terminal plate 250 are pressed and fixed by the terminal 260 assembled by rotation, the insulator 270 and/or the terminal plate 250 may rotate about the terminal 260 due to external vibration or impact.

A sectional view 500 illustrating the vicinity of the terminal 260 of the secondary battery in the assembled state shown in FIG. 5 is a sectional view taken along line YY' on a bottom view 510 looking toward the lower surface of the terminal plate 250.

Referring to FIG. 5, the sectional view 500 shows the terminal 260 of the secondary battery in an assembled state, and the gasket 280 according to some embodiments may include a portion disposed on the side surface of the head portion 260H and portions disposed on the inner wall of the first terminal through-hole of the one side 230S and on the inner wall of the second terminal through-hole of the insulator 270. In some embodiments, the gasket 280 may be configured so that its structure is not deformed even when compressed by 30% or more between the terminal 260 and the insulator 270 or between the terminal 260 and the one side 230S of the body portion.

Referring to the sectional view 500 showing the vicinity of the terminal 260 of the assembled secondary battery and the bottom view 510 looking toward the bottom of the terminal plate 250, the first lead tab 212 may be joined to a lower surface of the terminal plate 250 by welding or the like at a position adjacent to the other end opposite to one end adjacent to the terminal 260 of the terminal plate 250.

Referring to a bottom view 530 looking toward the lower surface of the terminal plate 250 when external vibration or impact is applied, the terminal plate 250 and the first lead tab 212, coupled to the first terminal plate, may rotate about the terminal 260 and deviate from the region of the one side 230S of the body portion. Alternatively, unlike the illustration, the insulator 270, the terminal plate 250, and the first lead tab 212 may rotate about the terminal 260 and deviate from the region of the one side 230S of the body portion.

Since the insulator 270 and the terminal plate 250 are pressed and fixed to the one side 230S of the body portion by the terminal 260, a degree by which the other end opposite to one end of the terminal plate 250 adjacent to the terminal 260 deviates from its original assembly position may be greatest. Therefore, the first lead tab 212 adjacent to the other end opposite to one end of the terminal plate 250 adjacent to the terminal 260 may easily contact the bottom surface of the body portion 230 or the cover 240 to cause a short circuit.

A sectional view 520 (taken along line XX' of the bottom view 510 in the direction of viewing the bottom surface of the terminal plate 250) may be compared with a sectional view 540 (taken along line XX' of the bottom view 530 in the direction of viewing the bottom surface of the terminal plate 250) when external vibration or impact is applied, whereof a bent portion of the first lead tab 212 may contact the cover 240 due to rotation of the terminal plate 250, causing a short circuit.

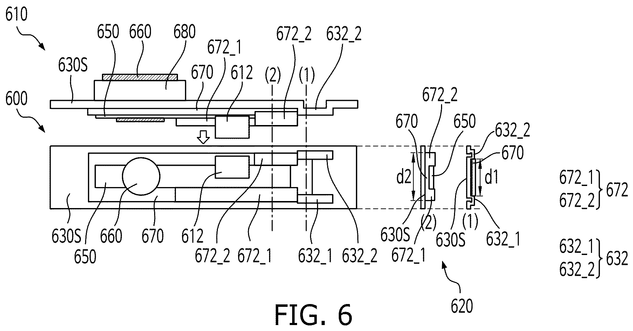

FIG. 6 is a schematic view illustrating a portion of a secondary battery according to some embodiments of the present disclosure.

Referring to a bottom view 600 (i.e., a view directed toward the lower surface of the terminal plate 650 in the vicinity of the terminal 660 of the secondary battery), the insulator 670 may include an extension wall 672 that protrudes downward from the lower surface of the insulator 670 to contact at least a portion of a long side surface of the terminal plate 650 and is configured to prevent rotation of the terminal plate 650 about the terminal 660. The extension wall is a component of the insulator and may be composed of the same material as the insulator described above.

In some embodiments, the extension wall 672 may include a first extension wall 672_1 contacting at least a portion of a first long side surface of the terminal plate 650 and a second extension wall 672_2 contacting at least a portion of a second long side surface opposite to the first long side surface. Accordingly, the terminal plate 650 may be prevented from rotating upward or downward in the bottom view 600 with respect to the terminal 660.

Referring to the bottom view 600, the extension wall 672 may be disposed to be close to the other end of the insulator 670 opposite to one end adjacent to the terminal 660 and may have an elongated barrier shape extending along a length direction of the terminal plate 650. Therefore, deformation of the insulator 670 due to impact may be less likely than when the extension wall is disposed at approximately a central part in the length direction of the insulator 670 or when a short protruding shape is similarly disposed.

In some embodiments, the first extension wall 672_1 and the second extension wall 672_2 may be asymmetrically disposed from each other with respect to the terminal plate 650. As illustrated in the bottom view 600, the first extension wall 672_1 is disposed as an elongated wall along the length direction of the terminal plate 650, whereas the second extension wall 672_2 may be disposed at a portion of the second long side surface of the insulator 670 belonging to an area other than an upper portion of the first lead tab 612. Lengths in the length direction of the first extension wall 672_1 and the second extension wall 672_2 may differ. Thus, a narrow space inside the case can be effectively used. The second extension wall 672_2 may be located on a side opposite to the terminal 660 with respect to an upper portion of the first lead tab 612.

Referring to a sectional view of 620 taken along line (2) of the bottom view 600, in some embodiments, cross sections of the first extension wall 672_1 and the second extension wall 672_2 may each have an approximately rectangular shape, and one surface of the first extension wall 672_1 and/or the second extension wall 672_2 may contact a side surface of the terminal plate 650 to prevent movement of the terminal plate 650.

Protruding lengths of the first extension wall 672_1 and the second extension wall 672_2 may be the same or different, as illustrated in a view 610 looking from above the bottom view 600. The first extension wall 672_1 and the second extension wall 672_2 may protrude below the lower surface of the terminal plate 650. Thus, reliability of preventing movement of the terminal plate 650 when external impact and vibration act from various directions can be improved.

In some embodiments, the body portion may further include a protrusion 632 that protrudes downward from the lower surface of the one side 630S of the body portion to contact at least a portion of a long side surface of the insulator 670 and is configured to prevent rotation of the insulator 670 about the terminal 660. The protrusion 632 is a component of the body portion and may be composed of a same material as that of the body portion described above.

Referring to the bottom view 600 (i.e., viewing a direction of the bottom surface of the terminal plate 650, in some embodiments, the protrusion 632 may be spaced apart from the cover or a bottom surface of the body portion by a predetermined distance. Further, the protrusion 632 may be disposed to pass (or extend) beyond a second end opposite to a first end adjacent to the terminal 660 in the insulator 670. Therefore, rotation of the insulator 670 and the terminal plate 650 about the terminal 660 may be effectively prevented.

Referring to the bottom view 600 (in the direction viewing the bottom surface of the terminal plate 650), the protrusion 632 may be disposed outside the extension wall 672. The protrusion 632 may include a first protrusion 632_1, contacting a second short side surface opposite to a first short side surface adjacent to the terminal 660 of the first extension wall 672_1, and a second protrusion 632_2, contacting a second short side surface opposite to a first short side surface adjacent to the terminal 660 of the second extension wall 672_2.

Referring to a sectional view of 620 taken along line of the bottom view 600 (in the direction viewing the bottom surface of the terminal plate 650), in some embodiments, cross sections of the first protrusion 632_1 and the second protrusion 632_2 may have an approximately angular recess (or groove) shape in which one side surface of the one side of the body portion is recessed downward from an outer surface of the one side, and one surface of the first protrusion 632_1 and/or the second protrusion 632_2 may contact a side surface of the insulator 670 to prevent movement of the insulator 670 and the terminal plate 650.

The protruded lengths of the first protrusion 632_1 and the second protrusion 632_2 may be the same or different, as shown in the sectional view along line (1) of 620 in the bottom view 600. Lower surfaces of each of the first protrusion 632_1 and the second protrusion 632_2 may be disposed above the lower surface of the insulator 670.

Referring to sectional views 620 taken along lines (1) and (2) of the bottom view 600 (in the direction viewing the bottom surface of the terminal plate 650), a longitudinal length d1 of a cross-sectional portion of the insulator 670 that contacts the protrusion 632 may be less than a longitudinal length d2 of a cross-sectional portion of the insulator 670 where the extension wall 672 is located. Thus, reliability of preventing rotation of the insulator 670 by the protrusion 632 may be further improved.

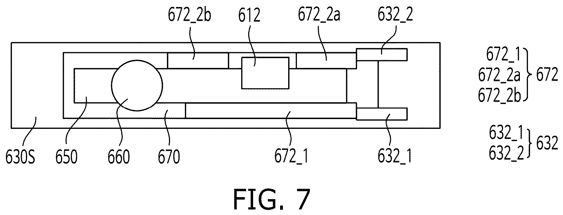

FIGS. 7 to 9 are schematic views of positions of extension walls of a secondary battery according to some embodiments of the present disclosure. FIGS. 7 to 9 are bottom views directed toward the lower surface of the terminal plate 650.

In some embodiments, the extension wall 672 may include a first extension wall 672_1 contacting at least a portion of a first long side surface of the terminal plate 650 and a second extension wall 672_2 contacting at least a portion of a second long side surface opposite to the first long side surface. The first lead tab 612 may be connected to at least a portion of a lower surface of the terminal plate 650 and a lower edge of the second long side surface.

Referring to FIG. 7, in some embodiments, the first extension wall 672_1 may contact at least one half of the first long side surface, and the second extension wall 672_2a, 672_2b may contact areas other than the upper portion of the first lead tab 612 on the second long side surface. In some embodiments, the second extension wall 672_2a, 672_2b may include a second-a extension wall 672_2a located in an area opposite to the terminal 660 with respect to an upper portion of the first lead tab 612, and a second-b extension wall 672_2b located in an area between the upper portion of the first lead tab 612 and the terminal 660.

The protrusion 632 may include a first protrusion 632_1 contacting a second short side surface opposite to a first short side surface adjacent to the terminal 660 of the first extension wall 672_1 and a second protrusion 632_2 contacting a second short side surface opposite to a first short side surface adjacent to the terminal 660 of the second-a extension wall 672_2a.

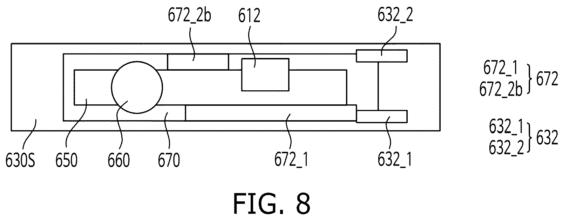

Referring to FIG. 8, in some embodiments, only the second-b extension wall 672_2b located in an area between the upper portion of the first lead tab 612 and the terminal on the second long side surface opposite to the first long side surface contacted by the first extension wall 672_1 may contact the second long side surface.

The protrusion 632 may include a first protrusion 632_1 contacting a second short side surface opposite to a first short side surface adjacent to the terminal 660 of the first extension wall 672_1 and a second protrusion 632_2 facing the first protrusion 632_1.

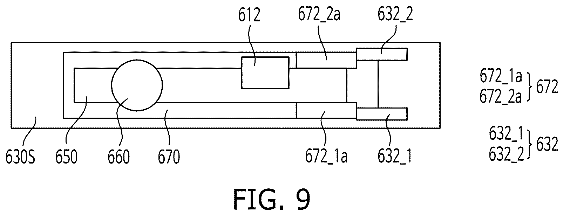

Referring to FIG. 9, in some embodiments, the extension wall 672 may include a first-a extension wall 672_1a contacting at least a portion of a first long side surface of the terminal plate 650 and a second-a extension wall 672_2a contacting at least a portion of a second long side surface opposite to the first long side surface. The first lead tab 612 may be connected to at least a portion of the lower surface of the terminal plate 650 and a lower edge of the second long side surface.

In some embodiments, the first-a extension wall 672_1a contacting at least a portion of the first long side surface of the terminal plate 650 may contact not more than one half of the first long side surface. Further, the second-a extension wall 672_2a contacting at least a portion of the second long side surface opposite to the first long side surface contacted by the first-a extension wall 672_1a may be located on a side opposite to the terminal 660 with respect to an upper portion of the first lead tab 612. In some embodiments, the first-a extension wall 672_1a may have a size a same as that of the second-a extension wall 672_2a and may be positioned to face the second-a extension wall 672_2a.

The protrusion 632 may include a first protrusion 632_1 contacting a second short side surface opposite to a first short side surface adjacent to the terminal 660 of the first-a extension wall 672_1a and a second protrusion 632_2 contacting a second short side surface opposite to a first short side surface adjacent to the terminal 660 of the second-a extension wall 672_2a.

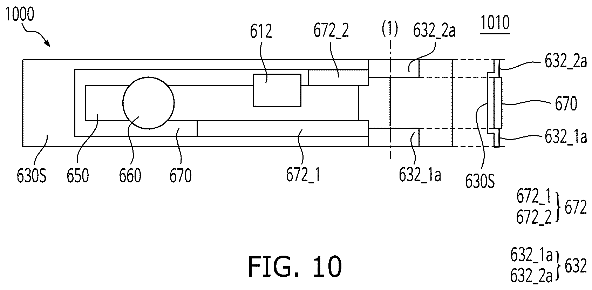

FIG. 10 is a schematic view of a protrusion of a secondary battery according to some embodiments of the present disclosure.

Referring to FIG. 10, the protrusion 632 may contact the cover or a bottom surface of the body portion.

Referring to a bottom view 1000 (i.e., a view directed to the lower surface of the terminal plate 650), the protrusion 632 may be disposed outside the extension wall 672. Further, the protrusion 632 may contact at least a portion of a side surface of the extension wall 672. In some embodiments, the protrusion 632 may include a first-a protrusion 632_1a contacting a second short side surface opposite to a first short side surface adjacent to the terminal 660 of the first extension wall 672_1 and a second-a protrusion 632_2a contacting a second short side surface opposite to a first short side surface adjacent to the terminal 660 of the second extension wall 672_2.

Referring to a sectional view 1010 taken along line (1) of the bottom view 1000, in some embodiments, cross sections of the first-a protrusion 632_1a and the second-a protrusion 632_2a have a groove shape in a direction downward from the outer surface of one side 630S of the body portion and toward the insulator from the bottom surface of the body portion or the cover. One surface may contact the side of the insulator 670, thereby preventing the movement of the insulator 670 and the terminal plate 650.

Protruding lengths of the first-a protrusion 632_1a and the second-a protrusion 632_2a may be the same or different, as shown in the sectional view 1010. Lower surfaces of each of the first-a protrusion 632_1a and the second-a protrusion 632_2a may be disposed above the lower surface of the insulator 670.

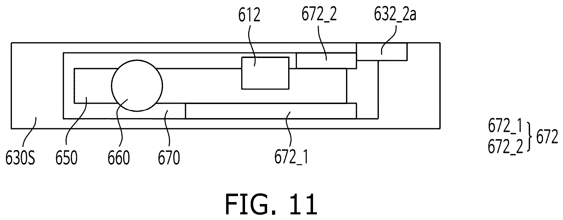

FIGS. 11 to 13 are schematic views of positions of protrusions of a secondary battery according to some embodiments of the present disclosure. In FIGS. 11 to 13, the extension wall 672 and the first lead tab 612 may have substantially the same structure and position as those described above with reference to FIG. 6. Further, FIGS. 11 to 13 show bottom views directed toward the lower surface of the terminal plate 650.

In some embodiments, the protrusion 632 may be disposed to pass beyond a second end opposite to a first end adjacent to the terminal 660 in the insulator 670. Further, the protrusion 632 may be disposed outside the extension wall 672 and may contact at least a portion of a side surface of the extension wall 672.

Referring to FIG. 11, only the second-a protrusion 632_2a contacting the second extension wall 672_2 may be disposed on the one side 630S of the body portion without the first protrusion contacting the first extension wall 672_1. Since rotation of the terminal plate 650 can be prevented by the first extension wall 672_1 and the second extension wall 672_2, even if only the second-a protrusion 632_2a contacting one side surface of the insulator 670 is disposed, movement of the terminal plate 650 and the insulator 670 can be reliably prevented. The second-a protrusion 632_2a contacting the second extension wall 672_2 may be substantially the same as the second-a protrusion 632_2a described above with reference to FIG. 10.

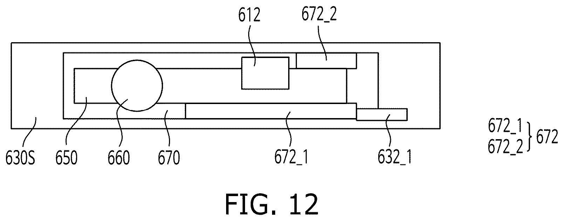

Referring to FIG. 12, only the first protrusion 632_1 contacting the first extension wall 672_1 may be disposed on the one side 630S of the body portion without the second protrusion contacting the second extension wall 672_2. Since rotation of the terminal plate 650 can be prevented by the first extension wall 672_1 and the second extension wall 672_2, even if only the first protrusion 632_1 contacting one side surface of the insulator 670 is disposed, movement of the terminal plate 650 and the insulator 670 can be reliably prevented. The first protrusion 632_1 contacting the first extension wall 672_1 may be substantially the same as the first protrusion 632_1 described above with reference to FIG. 6.

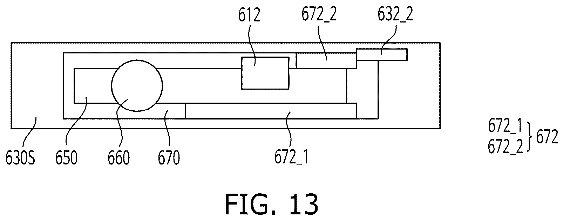

Referring to FIG. 13, at one side 630S of the body portion, the first protrusion contacting the first extension wall 672_1 is not disposed, and only the second protrusion 632_2 contacting the second extension wall 672_2 may be disposed. Since rotation of the terminal plate 650 can be prevented by the first extension wall 672_1 and the second extension wall 672_2, even if only the second protrusion 632_2 contacting one side surface of the insulator 670 is disposed, movement of the terminal plate 650 and the insulator 670 can be reliably prevented. The second protrusion 632_2 contacting the second extension wall 672_2 may be substantially the same as the second protrusion 632_2 described above with reference to FIG. 6.

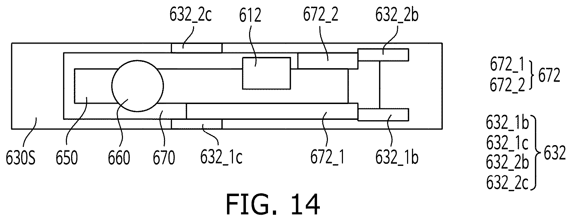

FIG. 14 is a schematic view of a protrusion of a secondary battery according to some embodiments of the present disclosure. In FIG. 14, the extension wall 672 and the first lead tab 612 may have substantially the same structure and position as those described above with reference to FIG. 6. Further, FIG. 14 shows a bottom view directed toward the lower surface of the terminal plate 650.

Referring to FIG. 14, in some embodiments, the protrusion 632 may include a first-b protrusion 632_1b contacting a second short side surface opposite to a first short side surface adjacent to the terminal 660 of the first extension wall 672_1, a first-c protrusion 632_1c contacting the first extension wall 672_1 while contacting a first long side surface of the insulator 670 at a position between an upper portion of the first lead tab 612 and the terminal 660, a second-b protrusion 632_2b contacting a second short side surface opposite to a first short side surface adjacent to the terminal 660 of the second extension wall 672_2, and a second-c protrusion 632_2c contacting a second long side surface of the insulator 670 at a position between the upper portion of the first lead tab 612 and the terminal 660.

The first-b protrusion 632_1b contacting a second short side surface opposite to a first short side surface adjacent to the terminal 660 of the first extension wall 672_1 and the second-b protrusion 632_2b contacting a second short side surface opposite to a first short side surface adjacent to the terminal 660 of the second extension wall 672_2 may have recess-shaped cross sections spaced apart from the bottom surface and the cover of the body portion by a predetermined distance.

Cross sections of the first-c protrusion 632_1c, which contacts the first long side surface of the insulator 670 at a position between the upper portion of the first lead tab 612 and the terminal 660, while also contacting the first extension wall 672_1, and of the second-c protrusion 632_2c, which contacts the second long side surface of the insulator 670 at a position between the upper portion of the first lead tab 612 and the terminal 660, may have a groove-shaped cross section recessed in the downward direction from the outer surface of one side 630S of the body portion, and toward the insulator from the bottom surface of the body portion or the cover.

Although the present disclosure has been described above with respect to embodiments, the present disclosure is not limited thereto. Various modifications and variations may be made by those skilled in the art.

## Claims

1. A secondary battery (100) comprising:
an electrode assembly (110, 210) including a lead tab (112, 114, 212, 214);
a body portion (130, 230, 630) including an accommodating portion (130A) in which the electrode assembly (110, 210) is accommodated, wherein a first terminal through-hole (230H) is formed on one side of the body portion (130, 230, 630), and wherein one end of the body portion (130, 230, 630) is open to form an open end;
a cover (140, 240) sealing the open end of the body portion (130, 230, 630);
an insulator (170, 270, 670) disposed on a lower surface of the one side of the body portion (130, 230, 630) and including a second terminal through-hole (270H) formed at a position in line with the first terminal through-hole (230H);
a terminal plate (150, 250, 650) having two long sides and two short sides, the terminal plate (150, 250, 650) being disposed on a lower surface of the insulator (170, 270, 670), and the terminal plate (150, 250, 650) having a third terminal through-hole (250H) formed at a position in line with the second terminal through-hole (270H);
a terminal (160, 260, 660) passing through the first terminal through-hole (230H), the second terminal through-hole (270H), and the third terminal through-hole (250H), the terminal (160, 260, 660) being electrically connected to the terminal plate (150, 250, 650); and
a gasket (280) surrounding at least a portion of a side surface of the terminal (160, 260, 660) such that at least a portion of the terminal (160, 260, 660) is exposed to an outside of the body portion (130, 230, 630), the gasket (280) being in close contact with an inner wall of the body portion (130, 230, 630),
wherein the insulator (170, 270, 670) includes an extension wall (172, 672) protruding downward from the lower surface of the insulator (170, 270, 670) to contact at least a portion of a long side surface of one of the two long sides of the terminal plate (150, 250, 650), the extension wall (172, 672) being configured to prevent rotation of the terminal plate (150, 250, 650) about the terminal (160, 260, 660).

2. The secondary battery according to claim 1, wherein the extension wall (172, 672) includes a first extension wall (672_1) contacting at least a portion of a first long side surface of the terminal plate (150, 250, 650) and a second extension wall (672_2) contacting at least a portion of a second long side surface of the terminal plate (150, 250, 650) opposite to the first long side surface, and wherein the first extension wall (672_1) and the second extension wall (672_2) are asymmetrically disposed from each other with respect to the terminal plate (150, 250, 650).

3. The secondary battery according to claim 1 or 2, wherein the extension wall (172, 672) includes a first extension wall (672_1) contacting at least a portion of a first long side surface of the terminal plate (150, 250, 650) and a second extension wall (672_2) contacting at least a portion of a second long side surface of the terminal plate (150, 250, 650), the second long side surface being opposite to the first long side surface, and wherein lengths, in a longitudinal direction, of the first extension wall (672_1) and the second extension wall (672_2) are different.

4. The secondary battery according to any one of the preceding claims, wherein the extension wall (172, 672) includes a first extension wall (672_1) contacting at least a portion of a first long side surface of the terminal plate (150, 250, 650) and a second extension wall (672_2) contacting at least a portion of a second long side surface of the terminal plate (150, 250, 650) opposite to the first long side surface,
wherein the lead tab (112, 114, 212, 214) is connected to at least a portion of a lower surface of the terminal plate (150, 250, 650) and a lower edge of the second long side surface,
wherein the first extension wall (672_1) contacts at least half of the first long side surface, and
wherein the second extension wall (672_2) contacts an area of the second long side surface other than an upper portion of the lead tab (112, 114, 212, 214).

5. The secondary battery according to claim 4, wherein the second extension wall (672_2) is located between an upper portion of the lead tab (112, 114, 212, 214) and the terminal (160, 260, 660), or
wherein the second extension wall (672_2) is located on a side of the terminal (160, 260, 660) that is opposite to a side of the terminal (160, 260, 660) where an upper portion of the lead tab (112, 114, 212, 214) is located.

6. The secondary battery according to any one of the preceding claims, wherein the extension wall (172, 672) includes a first extension wall (672_1) contacting at least a portion of a first long side surface of the terminal plate (150, 250, 650) and a second extension wall (672_2) contacting at least a portion of a second long side surface of the terminal plate (150, 250, 650) opposite to the first long side surface,
wherein the lead tab (112, 114, 212, 214) is connected to at least a portion of a lower surface of the terminal plate (150, 250, 650) and to a lower edge of the second long side surface,
wherein the second extension wall (672_2) is located on a side of the terminal (160, 260, 660) opposite to a side of the terminal (160, 260, 660) where an upper portion of the lead tab (112, 114, 212, 214) is located, and
wherein the first extension wall (672_1) has a same size as the second extension wall (672_2).

7. The secondary battery according to any one of the preceding claims, wherein the body portion (130, 230, 630) includes a protrusion (632) protruding downward from the lower surface of the one side of the body portion (130, 230, 630) to contact at least a portion of a long side surface of the insulator (170, 270, 670), the protrusion (632) being configured to prevent rotation of the insulator (170, 270, 670) about the terminal (160, 260, 660).

8. The secondary battery according to claim 7, wherein the protrusion (632) is spaced apart from the cover (140, 240) or from a bottom surface of the body portion (130, 230, 630) by a predetermined distance, or
wherein the protrusion (632) contacts the cover (140, 240) or a bottom surface of the body portion (130, 230, 630).

9. The secondary battery according to claim 7 or 8, wherein the protrusion (632) extends beyond a second end portion opposite to a first end portion adjacent to the terminal (160, 260, 660) in the insulator (170, 270, 670).

10. The secondary battery according to claim 8 or 9, wherein the protrusion (632) is disposed outward of the extension wall (172, 672), or
wherein the protrusion (632) contacts at least a portion of a side surface of the extension wall (172, 672).

11. The secondary battery according to any one of the claims 7 to 10, wherein the extension wall (172, 672) includes:
a first extension wall (672_1) contacting at least a portion of a first long side surface of the terminal plate (150, 250, 650), and
a second extension wall (672_2) contacting at least a portion of a second long side surface of the terminal plate (150, 250, 650) opposite to the first long side surface,
wherein the lead tab (112, 114, 212, 214) is connected to at least a portion of a lower surface of the terminal plate (150, 250, 650) and to a lower edge of the second long side surface,
wherein the first extension wall (672_1) contacts at least half of the first long side surface,
wherein the second extension wall (672_2) contacts an area of the second long side surface other than an upper portion of the lead tab (112, 114, 212, 214), and
wherein the protrusion (632) includes a first protrusion (632_1) contacting a second short side surface opposite to a first short side surface adjacent to a terminal (160, 260, 660) of the first extension wall (672_1), and a second protrusion(632_2) contacting a second short side surface opposite to a first short side surface adjacent to a terminal (160, 260, 660) of the second extension wall (672_2).

12. The secondary battery according to any one of the claims 7 to 11, wherein a longitudinal length of a cross-sectional area in contact with the protrusion (632) in the insulator (170, 270, 670) is less than a longitudinal length of a cross-sectional area where the extension wall (172, 672) is located in the insulator (170, 270, 670).

13. The secondary battery according to any one of the preceding claims, wherein the terminal (160, 260, 660) includes:
a head portion (260H) at least partially exposed outside the body portion (130, 230, 630);
a pin portion (260P) connected to a lower surface of the head portion (260H) and passing through the first terminal through-hole (230H), the second terminal through-hole (270H), and the third terminal through-hole (250H); and
a bottom portion (260B) coupled to a lower surface of the pin portion (260P), pressing together and fixing together the one side of the body portion (130, 230, 630), the insulator (170, 270, 670), and the terminal plate (150, 250, 650).

14. The secondary battery according to any one of the preceding claims, wherein the body portion (130, 230, 630) and the cover (140, 240) each include stainless steel.

15. The secondary battery according to any one of the preceding claims, wherein a thickness of the body portion (130, 230, 630) is from about 0.05 mm to about 0.3 mm, and wherein a thickness of the cover (140, 240) is from about 0.05 mm to about 0.3 mm.
